# EUROPEAN PATENT APPLICATION

(11) **EP 1 199 184 A1**
(43) Date of publication of application: **24.04.2002**
(21) Application number: 01917814.4
(22) Date of filing: 03.04.2001
(51) Int. Cl.: B41M 5/26, G11B 7/24

(54) **WRITE-ONCE OPTICAL RECORD MEDIUM**

(30) Priority: 03.04.2000 JP 2000100948
(71) Applicant: Sony Corporation, Tokyo 141-0001 (JP)
(72) Inventor: OYAMADA, Mitsuaki, Sony Corporation, Tokyo 141-0001 (JP); IWAMURA, Takashi, Sony Corporation, Tokyo 141-0001 (JP); TAMURA, Shinichiro, Sony Corporation, Tokyo 141-0001 (JP)
(74) Representative: Müller, Frithjof E., Dipl.-Ing.
(86) International application number: JP0102903
(87) International publication number: WO0174600

(57) **Abstract**

In a write once optical recording medium comprising a recording layer and a light transmitting protective layer formed successively on a supporting body, for recording and reproduction by irradiating a laser beam of a 380 to 450 nm wavelength from the light transmitting protective layer side, λₘₐₓ ≤ 370 nm on the premise that the wavelength providing the peak optical absorption coefficient of the recording layer is defined to be λₘₐₓ.

## Description

### TECHNICAL FIELD

The present invention relates to a write once optical recording medium.

### BACKGROUND ART

Recently, development and commercialization of an optical recording medium capable of recording and reproducing information by a laser beam have progressed.

Particularly, attention has been paid to a so-called write once optical recording medium, which is an inexpensive medium, capable of storing a tremendous amount of data such as animation or the like and writing information only once.

As the write once optical recording medium, a CD-R (compact disc-recordable) capable of recording and reproducing with the same format as that of a CD-ROM (compact disc-read only memory) has been widely used.

As an optical recording medium having a storage capacity larger than that of the CD-ROM, a DVD-ROM (digital versatile disc-read only memory) has also been developed and used practically. Further, a DVD-R (digital versatile disc-recordable) capable of recording and reproducing with the same format as that of the DVD-ROM has been developed.

Among the write once optical recording media, the CD-R and the DVD-R can be recorded and reproduced by laser beams of 780 nm and 650 nm, respectively.

Here, the recording density of the optical recording medium increases inversely proportional to the square of the light wavelength in principle.

That is, in order to achieve recording with a higher density, it is necessary to use a shorter wavelength laser beam.

Recently, a laser capable of emitting a laser beam having a wavelength of 380 to 450 nm using GaN, SHG (Second Harmonic Generation), or the like has been developed, and thereby development of an optical recording medium having a further larger capacity has been executed actively.

However, at present, a recording layer material necessary for realizing a write once optical recording medium employing the laser beam of a 380 to 450 nm wavelength has not sufficiently been developed yet.

Moreover, since the laser beam of a 380 to 450 nm wavelength has a high energy density, it may damage a recording layer in an optical system having a large numerical aperture NA with a small laser beam diameter even if the power is small at the time of reading. Therefore, stability in repeated reading is problematic.

Accordingly, the present inventors have studied the above-mentioned problem elaborately, and consequently, have realized an optical recording medium employing a recording material preferable for the write once optical recording medium using a laser beam of a 380 to 450 nm wavelength, capable of providing a high stability in repeated reading.

### DISCLOSURE OF THE INVENTION

A write once optical recording medium according to the present invention comprises a recording layer on a supporting body, and a light transmitting protective layer on the recording layer, for recording and reproduction by directing a laser beam of a 380 to 450 nm wavelength from the light transmitting protective layer surface, characterized by λₘₐₓ ≤ 370 nm on the premise that the wavelength providing the peak optical absorption coefficient of the recording layer is defined to be λₘₐₓ.

According to the present invention, a write once optical recording medium having a high stability can be obtained even in the case of repeated reading using an optical system having a large numerical aperture NA with a small laser beam diameter with the use of a laser beam of a 380 to 450 nm wavelength.

### BRIEF DESCRIPTION OF THE DRAWINGS

FIG. 1 is a schematic sectional view of an embodiment of a write once optical recording medium according to the present invention.
FIG. 2 is a schematic sectional view of another embodiment of a write once optical recording medium according to the present invention.
FIG. 3 shows the wavelength dependency of the absorption coefficient k of the compound represented by the [chemical formula 5].

### BEST MODE FOR CARRYING OUT THE INVENTION

A write once optical recording medium according to the present invention, on and from which recording and reproducing are performed by a laser beam 380 to 450 nm wavelength, comprises a supporting body made of a thermoplastic resin provided with a guide groove on the surface, a recording layer on the supporting body surface, and a light transmitting protective layer on the recording layer, for recording and reproducing a signal by directing a laser beam of a 380 to 450 nm wavelength from the light transmitting protective layer side surface.

Hereinafter, the write once optical recording medium according to the present invention will be explained with reference to embodiments thereof. However, the write once optical recording medium of the present invention is not limited to the embodiments shown below.

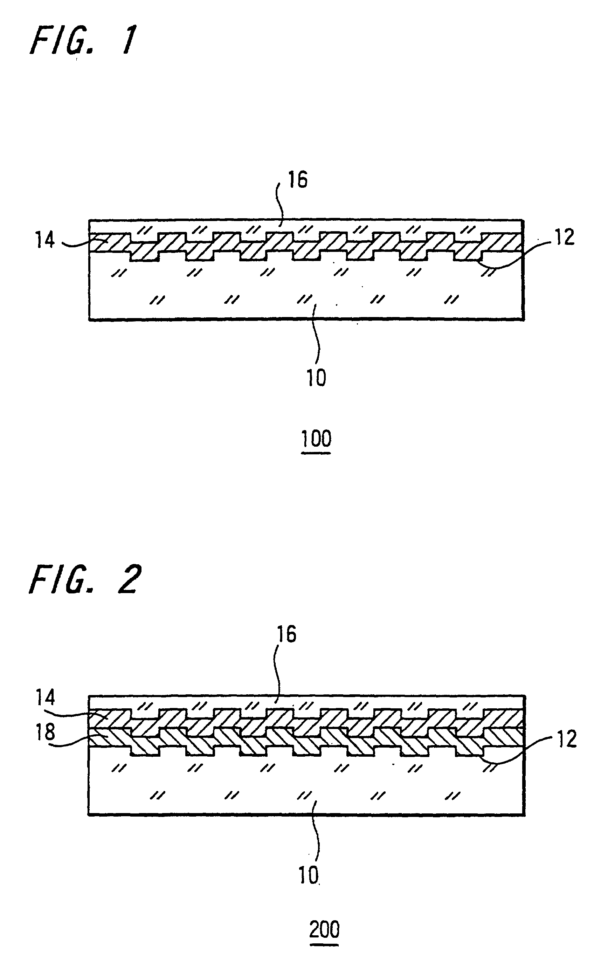

FIG. 1 is a schematic sectional view of an embodiment of a write once optical recording medium according to the present invention.

A write once optical recording medium 100 according to the present invention comprises a supporting body 10 made of a thermoplastic resin with a guide groove 12 formed on the surface, a recording layer 14 on the supporting body, and a light transmitting protective layer 16 formed on the recording layer 14.

In the write once optical recording medium 100, an information signal is recorded thereon and reproduced therefrom by irradiating thereto a laser beam of a 380 to 450 nm wavelength from the light transmitting protective layer 16 side.

For the supporting body 10 made of a thermoplastic resin, for example, a polycarbonate, a polymethacrylate, a polyolefin, or the like, can be used. It can be produced by injection molding using a stamper with ruggedness for transferring the guide groove.

The supporting body 10 may either be transparent or opaque with respect to the laser beam.

The recording layer 14 on the supporting body 10 is made of an organic or inorganic recording material. As the method for forming the recording layer 14, a spin coat method of dissolving the recording material in a predetermined solvent, applying the solvent by spin coating to thereby apply a drying process, and a vacuum deposition method of setting the supporting body 10 and a recording material in a vacuum vessel, heating the recording material so as to be sublimated, and depositing the same on the supporting body 10, or the like, can be presented.

In terms of the reading stability, as the physical property required of the recording layer, the absorption coefficient k can be presented. Among the optical constants of the recording layer, when the absorption coefficient k value is large with respect to the laser beam wavelength, a calorie sufficient enough for bringing about the change of the recording layer can be generated so that it is necessary for the k value to be small. Moreover, in order to restrain the change of the recording layer by a visible light, or an infrared ray, which is a beam having a wavelength longer than the wavelength of the laser beam, the k value is preferably small in the visible light and infrared ray range.

Considering the absorption spectrum satisfying these conditions, it can be provided as long as the point at which the k is maximal, that is, the absorption peak has a wavelength shorter than the wavelength of the laser beam.

As the recording material to be used for the recording layer 14, a compound represented by the below-mentioned [chemical formula 1] can be presented. 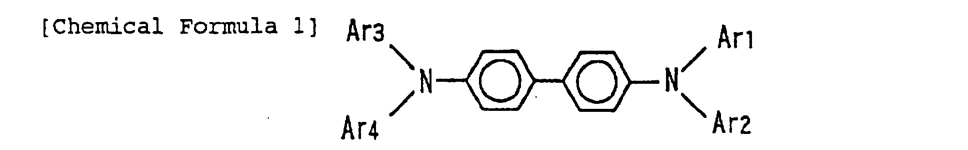 (wherein each of Ar₁, Ar₂, Ar₃, Ar₄ are a substituted or unsubstituted phenyl group, a substituted or unsubstituted naphthyl group, or a substituted or unsubstituted biphenyl group, that may be same or different.)

As specific examples of the compounds represented by the above-mentioned [chemical formula 1], a compound represented by the below-mentioned [Chemical Formula 2], wherein Ar₁, Ar₃ are a phenyl group, and Ar₂, Ar₄ are a 4'(diphenylamino)biphenyl-4-yl group, a compound represented by the below-mentioned [Chemical Formula 3], wherein Ar₁, Ar₃ are a phenyl group, and Ar₂, Ar₄ are a naphthyl group, and a compound represented by the below-mentioned [Chemical Formula 4], wherein Ar₁, Ar₃ are a phenyl group, and Ar₂, Ar₄ are a 4'(diphenylamino)phenyl group, or the like, can be presented.

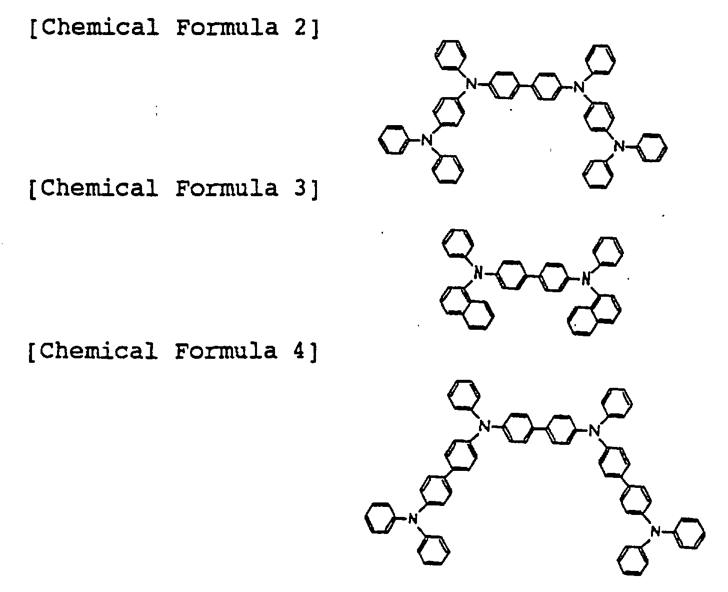

Moreover, as a recording material to be used for the recording layer 14, a compound represented by the below-mentioned [Chemical Formula 5] can be adopted. 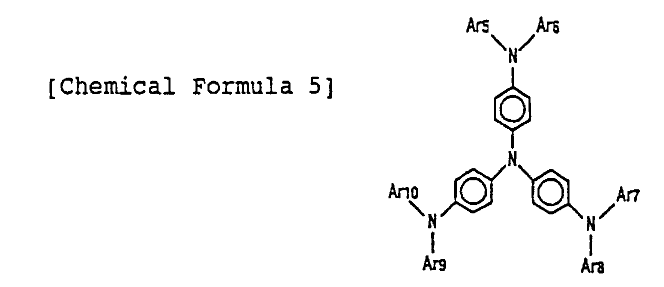 (wherei n each of Ar₅, Ar₆, Ar₇, Ar₈, Ar₉, Ar₁₀ are a substituted or unsubstituted phenyl group, a substituted or unsubstituted naphthyl group, or a substituted or unsubstituted biphenyl group, that may be same or different.)

As specific examples of the compounds represented by the above-mentioned [chemical formula 5], a compound represented by the below-mentioned [compound 6], wherein Ar₅, Ar₇, Ar₉ are a phenyl group, and Ar₆, Ar₈, Ar₁₀ are a 3-(methyl)phenyl group, can be presented.

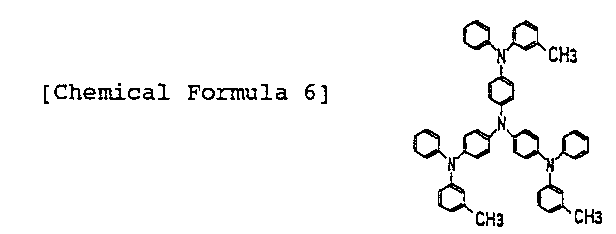

Moreover, as a recording material adopted for the recording layer 14, Cₙ (wherein, n is an integer capable of obtaining a geometrically spherical compound), in particular, a fullerene with n = 60 can be employed.

Furthermore, as a recording material adopted for the recording layer 14, a compound represented by the below-mentioned [Chemical Formula 7] can be adopted. 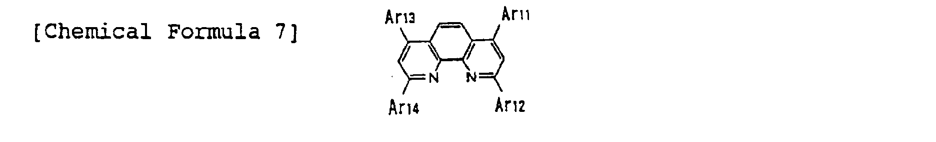 (wherein each of Ar₁₁, Ar₁₂, Ar₁₃, Ar₁₄ are a substituted or unsubstituted phenyl group, a substituted or unsubstituted naphthyl group, or a substituted or unsubstituted biphenyl group, that may be same or different.)

As specific examples of the compounds represented by the above-mentioned [Chemical Formula 7], a compound represented by the below-mentioned [Chemical Formula 8], wherein Ar₁₁, Ar₁₂, Ar₁₃, Ar₁₄ are a phenyl group, can be presented.

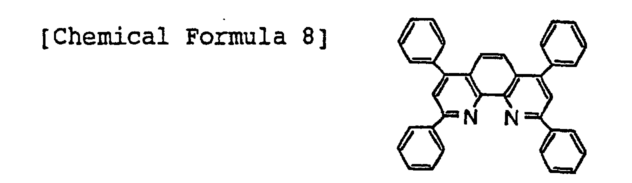

The light transmitting protective layer 16 is formed on the above-mentioned recording layer 14. The protective layer 16 can be formed of a light transmitting thermoplastic resin, a glass, or an adhesive layer. The thickness is about 10 to 177 µm.

Moreover, when a light transmitting adhesive layer is disposed, a light transmitting both side adhesive sheet, a photo curing resin can be adopted. If needed, a transparent protective layer may further be formed.

As the transparent protective layer, oxide, nitride, sulfide, fluoride, or the like, of a rare earth element, such as Mg, Al, Si, Ti, Zn, Ga, Ge, Zr, In, Sn, Sb, Ba, Hf, Ta, Sc, and Y alone, or a material made of a mixture thereof, can be adopted.

A write once optical recording medium according to the present invention may have the structure shown in FIG. 2.

The write once optical recording medium 200 shown in FIG. 2 comprises a supporting body 10 made of a thermoplastic resin with a guide groove 12 formed on the surface, a reflection layer 18 and a recording layer 14 on the supporting body 10, and a light transmitting protective layer 16 on the recording layer 14.

In the write once optical recording medium 200, a signal is recorded and reproduced by directing a laser beam of a 380 to 450 nm wavelength from the protective layer 16 side. It differs from the write once optical recording medium 100 shown in FIG. 1 in that the reflection layer 18 is formed.

The reflection layer 18 can be formed by a sputtering method using Al, Ag, Au alone or an alloy thereof, or the like.

Next, the write once optical recording medium according to the present invention will be explained with reference to specific Examples.

### Example 1

On a polycarbonate supporting body 10 with a guide groove 12, a recording layer 14 of a compound (refractive index 2.3) represented by the above-mentioned [Chemical Formula 2] was formed a 100 nm thick film by a vacuum deposition method.

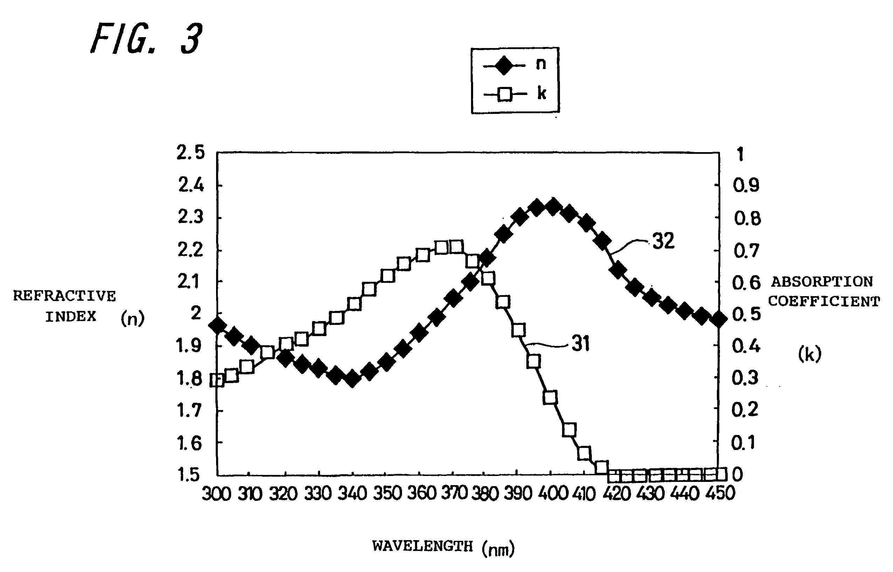

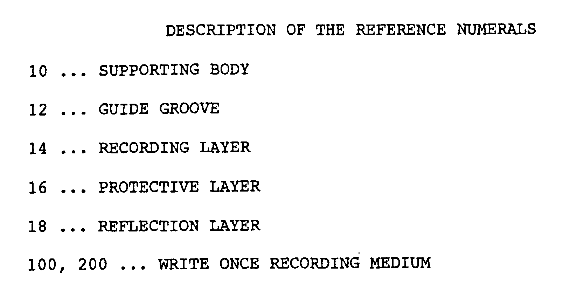

The wavelength dependency of the absorption wavelength coefficient k of the compound represented by the [Chemical Formula 2] is shown by the curve 31 in FIG. 3, and the wavelength dependency of the refractive index n is shown by the curve 32.

The peak wavelength (λₘₐₓ) of the absorption coefficient was 370 nm.

On the recording layer 14, as the light transmitting protective layer 16, it was bonded via a polycarbonate transparent adhesive film of 100 µm in thickness, having the same size as that of the supporting body 10 so as to form the protective layer 16, and produce the write once optical recording medium 100.

When a laser beam of a 405 nm exciting wavelength had been irradiated to the write once optical recording medium 100 such produced from the light transmitting protective layer 16 side, for recording with a 3 mW laser power, a pit was formed on the recording layer 14.

As the optical system, one having an objective lens of a 0.85 numerical aperture NA was used.

The same is applied to the following Example and comparative example.

Moreover, data was read out from the recorded optical recording medium 100 by irradiating a laser beam from the light transmitting protective layer 16 side with a 0.2 mW laser power weaker than that at the time of recording. The reading operation was executed repeatedly by 10,000 times. The CNR (Carrier to Noise Ratio) immediately after writing was 50.0 dB, and the CNR after repeated reading of 10,000 times was 49.6 dB, which is substantially the same as the value immediately after writing.

### Example 2

On a polycarbonate supporting body 10 with a guide groove 12, a recording layer 14 of a compound (refractive index 2.3) represented by the above-mentioned [Chemical Formula 6] was formed by a vacuum deposition method. The absorption wavelength peak of the compound represented by the [Chemical Formula 6] (λₘₐₓ) was 360 nm, and the recording layer film thickness was 100 nm.

On the recording layer 14, as the light transmitting protective layer 16, it was bonded via a polycarbonate transparent adhesive film of a 100 µm thickness, having the same size as that of the supporting body 10 so as to form the protective layer 16, and produce the write once optical recording medium 100.

When a laser beam of a 405 nm exciting wavelength had been irradiated to the write once optical recording medium 100 such produced from the light transmitting protective layer 16 side, for recording with a 3 mW laser power, a pit was formed on the recording layer 14.

Moreover, data was read out from the recorded optical recording medium 100 by irradiating a laser beam from the light transmitting protective layer 16 side with a 0.2 mW laser power weaker than that at the time of recording. The reading operation was executed repeatedly by 10,000 times. The CNR immediately after writing was 48.9 dB, and the CNR after repeated reading of 10,000 times was 48.6 dB, which is substantially the same as the value immediately after writing.

### Example 3

On a polycarbonate supporting body 10 with a guide groove formed 12, a fullerene (C₆₀) recording layer 14 (refractive index 2.5) was formed by a vacuum deposition method. The peak absorption coefficient wavelength (λₘₐₓ) of the fullerene was 335 nm, and the recording layer film thickness was 100 nm.

On the recording layer 14, as the light transmitting protective layer 16, it was bonded via a polycarbonate transparent adhesive film of a 100 µm thickness, having the same size as that of the supporting body 10 so as to form the protective layer 16, and produce the write once optical recording medium 100.

When a laser beam of a 405 nm exciting wavelength had been irradiated to the write once optical recording medium 100 such produced from the light transmitting protective layer 16 side, for recording with a 3 mW laser power, a pit was formed on the recording layer 14.

Moreover, data was read out from the recorded optical recording medium 100 by irradiating a laser beam from the light transmitting protective layer 16 side with a 0.2 mW laser power weaker than that at the time of recording. The reading operation was executed repeatedly by 10,000 times. The CNR immediately after writing was 47.7 dB, and the CNR after repeated reading of 10,000 times was 47.3 dB, which is substantially the same as the value immediately after writing.

### Example 4

On a polycarbonate supporting body 10 with a guide groove 12, a recording layer 14 of a compound (refractive index 2.3) represented by the above-mentioned [Chemical Formula 8] was formed by a vacuum deposition method.

The peak absorption coefficient wavelength of the compound represented by the [Chemical Formula 8] (λₘₐₓ) was 308 nm, and the recording layer film thickness was 100 nm.

On the recording layer 14, as the light transmitting protective layer 16, it was bonded via a polycarbonate transparent adhesive film of a 100 µm thickness, having the same size as that of the supporting body 10 so as to form the protective layer 16, and produce the write once optical recording medium 100.

When a laser beam of a 405 nm exciting wavelength had been irradiated to the write once optical recording medium 100 such produced from the light transmitting protective layer 16 side, for recording with a 3 mW laser power, a pit was formed on the recording layer 14.

Moreover, data was read out from the recorded optical recording medium 100 by irradiating a laser beam from the light transmitting protective layer 16 side with a 0.2 mW laser power weaker than that at the time of recording. The reading operation was executed repeatedly by 10,000 times. The CNR immediately after writing was 48.8 dB, and the CNR after repeated reading of 10,000 times was 48.3 dB, which is substantially the same as the value immediately after writing. Comparative Example

On a polycarbonate supporting body 10 with a guide groove formed 12, a cyanine pigment recording layer 14 of a compound represented by the below-mentioned [Chemical Formula 9] was formed by a spin coat method.

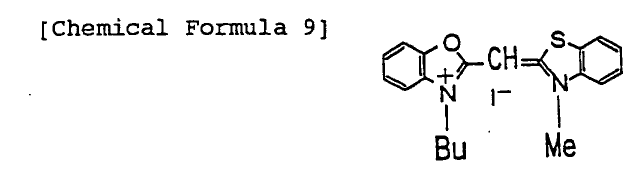

The peak absorption coefficient wavelength of the compound represented by the [Chemical Formula 9] (λₘₐₓ) was 405 nm, and the recording layer film thickness was 100 nm.

On the recording layer 14, as the light transmitting protective layer 16, it was bonded via a polycarbonate transparent adhesive film of a 100 µm thickness, having the same size as that of the supporting body 10 so as to form the protective layer 16, and produce the write once optical recording medium 100.

To the write once optical recording medium 100 accordingly produced, a laser beam of a 405 nm exciting wavelength was directed from the light transmitting protective layer 16 side for recording by a 3 mW laser power, a pit was formed on the recording layer 14.

Moreover, the recorded optical recording medium 100 was read out by directing a laser beam from the light transmitting protective layer 16 side by a 0.2 mW laser power weaker than that at the time of recording. The reading operation was executed repeatedly by 10,000 times. The CNR immediately after writing was 40.8 dB. As to the CNR after repeated reading of 10,000 times, since the pit shape was changed drastically, the signal reproduction was disabled.

According to the present invention, a highly reliable write once optical recording medium, capable of reproducing and recording information with a high stability if a laser beam of a 380 to 450 nm wavelength is used, and even in the case an optical system having a large numerical aperture NA with a small laser beam diameter is used for recording and reproduction, and capable of effectively avoiding deterioration of the recording layer even in the case of repeated reading for many times, can be provided.

## Claims

1. A write once optical recording medium comprising a recording layer and a light transmitting protective layer formed successively on a supporting body, for recording and reproduction by irradiating a laser beam of
a 380 to 450 nm wavelength from the light transmitting protective layer side,
**characterized in that**
λₘₐₓ ≤ 370 nm
on the premise that the wavelength providing the peak optical absorption coefficient of the recording layer is defined to be λₘₐₓ.

2. The write once optical recording medium according to claim 1, **characterized in that** the recording layer contains a compound represented by the below-mentioned [chemical formula 10]: 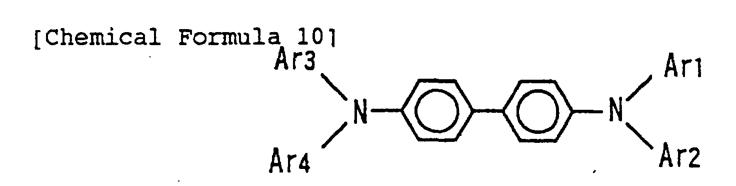 (wherein each of Ar₁, Ar₂, Ar₃, Ar₄ are a substituted or unsubstituted phenyl group, a substituted or unsubstituted naphthyl group, or a substituted or unsubstituted biphenyl group, that may be the same or different.)

3. The write once optical recording medium according to claim 1, **characterized in that** the recording layer contains a compound represented by the below-mentioned [chemical formula 11] : 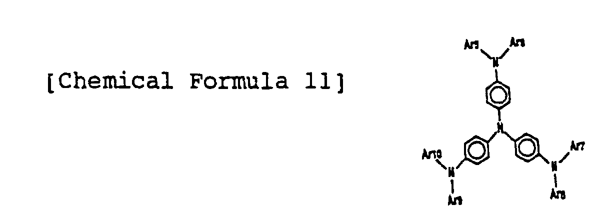 (wherein each of Ar₅, Ar₆, Ar₇, Ar₈, Ar₉, Ar₁₀ are a substituted or unsubstituted phenyl group, a substituted or unsubstituted naphthyl group, or a substituted or unsubstituted biphenyl group, that may be same or different.)

4. The write once optical recording medium according to claim 1, **characterized in that** said recording layer contains Cₙ (wherein, n is an integer of 60 or more capable of obtaining a geometrically spherical compound).

5. The write once optical recording medium according to claim 4, **characterized in that** n of said Cₙ is 60.

6. The write once optical recording medium according to claim 1, **characterized in that** said recording layer contains a compound represented by the below-mentioned [Chemical Formula 12]: 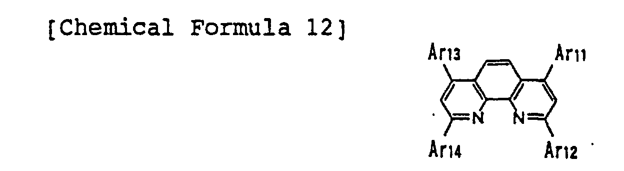 (wherein each of Ar₁₁, Ar₁₂, Ar₁₃, Ar₁₄ are a substituted or unsubstituted phenyl group, a substituted or unsubstituted naphthyl group, or a substituted or unsubstituted biphenyl group, that may be the same or different.)
